# EUROPEAN PATENT SPECIFICATION

(11) **EP 2 238 362 B1**
(45) Date of publication and mention of the grant of the patent: **11.03.2015**
(21) Application number: 08713608.1
(22) Date of filing: 07.01.2008
(51) Int. Cl.: F16C 33/18, F16C 33/20, F16C 35/077

(54) **ROTORCRAFT WITH HOUSING ASSEMBLY HAVING IMPROVED BEARING LINER**
DREHFLÜGLER MIT GEHÄUSEANORDNUNG MIT VERBESSERTER LAGERBUCHSE
AÉRONEFS À VOILURE TOURNANTE AVEC ENSEMBLE BOÎTIER DOTÉ D'UN REVÊTEMENT DE PALIERS AMÉLIORÉ

(43) Date of publication of application: 13.10.2010
(73) Proprietor: Bell Helicopter Textron Inc., Hurst, TX 76053 (US)
(72) Inventor: EHINGER, Ryan, T., Irving TX 75063 (US); JACKSON, K., Myron, Euless TX 76039 (US); KILMAIN, Charles, J., Fort Worth TX 76123 (US)
(74) Representative: Lawrence, John
(86) International application number: PCT/US2008/050380
(87) International publication number: WO 2009/088503

(56) References cited:
- DE-A1- 10 161 820
- US-A- 4 181 264
- US-A- 4 715 780
- US-A- 4 721 441
- US-A- 4 945 780
- US-A- 5 954 880
- US-A1- 2007 116 396
- US-A1- 2007 116 396
- US-A1- 2007 262 197
- US-A1- 2007 262 197

## Description

### FIELD

The invention relates to a housing assembly, a liner for a bearing assembly, and methods.

### BACKGROUND

A housing assembly for a bearing assembly generally includes a bearing and a bearing housing for supporting the bearing therein. Bearing assemblies may be used in a wide array of applications for supporting a moving member. Bearing liners may be inserted between the bearing and the bearing housing to provide wear resistance in the bearing assembly and/or locate the bearing with respect to other housing and bearing components. Bearing liners may be easily replaceable when damage and/or a manufacturing error occurs in a component of the housing assembly. Steel bearing liners, either in raw or in hardened form, may be used to provide wear resistance between the bearing and the bearing housing.

US5954880 discloses a roller bearing for a roller support device used in a molten metal bath in which materials are selected to have a low wettability with respect to a molten metal. A roller bearing liner is disclosed which may be of tantalum, graphite, C/C composite, silicon carbide, or an alloy consisting mainly of tantalum, molybdenum disulfide or zirconium oxide.

DE10161820 discloses a bearing with reduced galvanic corrosion in which the bearing is ground and then spray coated with a ceramic material.

US2007/0116396 discloses a bearing assembly with a bearing, bearing liner and bearing housing. The bearing liner has an annular channel that contains an anti-rotation and damping element.

### SUMMARY

Provided herein is a rotorcraft with a housing assembly. The housing assembly includes a housing including an opening; a bearing configured to radially and/or axially support a shaft that is adapted to rotate, the bearing disposed within the opening of the housing; and a liner arranged between the housing and the bearing, wherein the liner is made of a material selected from the group consisting of ceramic material, ceramic coated material, ceramic and metallic hybrid material, lightweight metallic material, lightweight metallic alloy material and lightweight metallic coated material.

In an embodiment, a liner for use in a rotorcraft is provided. The liner is configured to be positioned between a housing and a bearing. The liner is made of a material selected from the group consisting of ceramic material, ceramic coated material, ceramic and metallic hybrid material, lightweight metallic material, lightweight metallic alloy material and lightweight metallic coated material.

In an embodiment, a housing assembly for supporting a rotating member is provided. The housing assembly includes a bearing configured to radially and/or axially support the member; a housing configured to support the bearing therein; and a liner positioned between the housing and the bearing, wherein the liner is made of a material selected from the group consisting of ceramic material, ceramic coated material, ceramic and metallic hybrid material, lightweight metallic material, lightweight metallic alloy materials and lightweight metallic coated material.
These and other aspects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### BRIEF DESCRIPTION OF THE DRA WINGS

Embodiments of the invention will now be described, by way of example only, with reference to the accompanying schematic drawings in which corresponding reference symbols indicate corresponding parts.
FIG. 1 is an exploded cross-section view of a main rotor gearbox of a helicopter, in accordance with an embodiment of the invention.
FIG. 2 is an exploded cross-section view of a bearing mount assembly located in the main rotor gearbox of the helicopter, in accordance with an embodiment of the invention.
FIG. 3A is a cross-section view of a shouldered pinned bearing liner, in accordance with an embodiment of the invention.
FIG. 3B is a cross-section view of another shouldered pinned bearing liner, in accordance with an embodiment of the invention.
FIG. 3C is a cross-section view of a cylindrical bearing liner, in accordance with an embodiment of the invention.
FIG. 4 is a schematic illustration of a method for manufacturing a ceramic liner for use in a bearing assembly, in accordance with an embodiment of the invention.
FIG. 5 is a schematic illustration of a method for installing a ceramic liner in a bearing assembly, in accordance with an embodiment of the invention.
FIG. 6 is a schematic illustration of a method for manufacturing a lightweight metallic liner for use in a bearing assembly, in accordance with an embodiment of the invention.
FIG. 7 is a schematic illustration of a method for installing a lightweight metallic liner in a bearing assembly, in accordance with an embodiment of the invention.

### DETAILED DESCRIPTION

Embodiments of the invention include a housing assembly for a bearing assembly having a housing including an opening, a bearing configured to radially and /or axially support a moving member and a liner arranged between the housing and the bearing. The liner may be made of a material selected from the group consisting of ceramic material, ceramic coated material, ceramic and metallic hybrid material, lightweight metallic material, lightweight metallic alloy material and lightweight metallic coated material. The use of ceramic material or lightweight metallic material may significantly reduce the total weight of the housing assembly. This weight reduction may be beneficial for a housing assembly used, for example, in an aircraft.

The use of the housing assembly according to one embodiment of the invention presents various benefits over a conventional housing assembly that includes a steel liner. First, steel liners add weight to the housing assembly. The additional weight added by a steel bearing liner might be detrimental particularly in the housing assemblies used in a helicopter, a tiltrotor, an aircraft or a rotorcraft. Further, the steel bearing liner may be susceptible to or induce corrosion. Therefore, it is desirable to provide the housing assembly with a bearing liner that not only provides wear resistance but also provides weight savings and improved resistance to both galvanic and atmospheric corrosion.

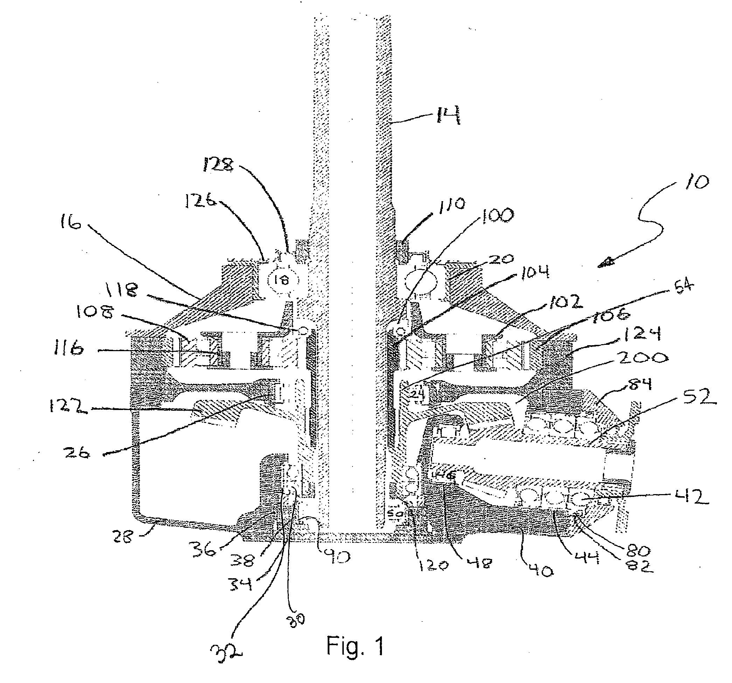

The housing assembly for a bearing assembly may be used in various apparatus, system or device to support a moving member. In one embodiment, the housing assembly includes a ceramic liner or a lightweight metallic liner and is used in a rotorcraft to support various rotating or moving members. FIG. 1 is an exemplary illustration of a main rotor gearbox 10 of a helicopter in accordance with an embodiment of the invention. The main rotor gearbox 10 includes a plurality of bearing assemblies to support various moving and/or rotating members.

As shown in FIG.1, main rotor gearbox 10 includes a bearing support housing 16 including a first receiving portion 100 configured to receive a main rotor shaft 14 and a second receiving portion 200 configured to receive a spiral bevel input pinion 52. The spiral bevel input pinion 52 is supported with the bearing assemblies 42 and 46. The main rotor gearbox 10 also includes bearing assemblies 18 and 50 to support the main rotor shaft 14. A main drive shaft (not shown) transfers power from an engine (not shown) to the main rotor gearbox 10 via the spiral bevel input pinion 52. The main rotor shaft 14 carries power from the main rotor gearbox 10 to main rotor blades (not shown).

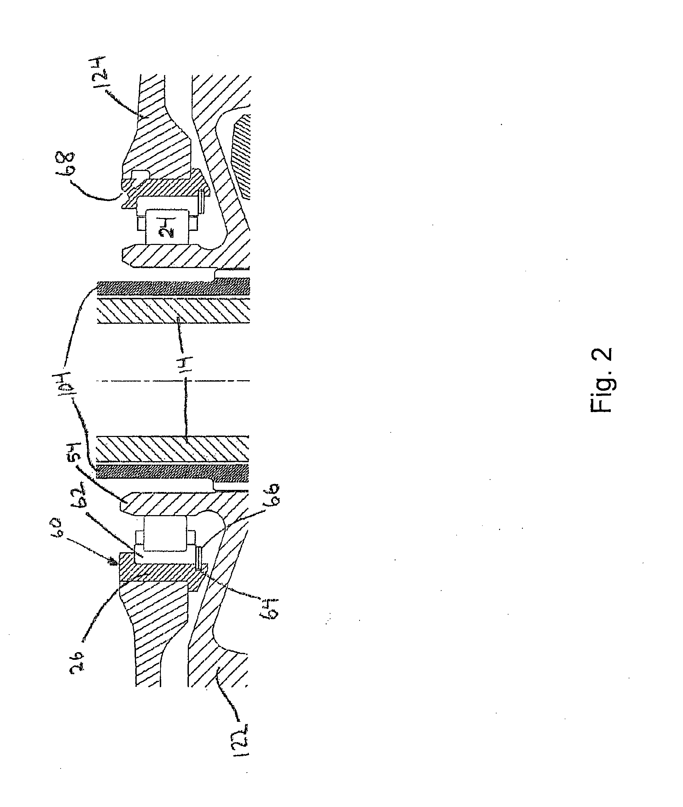

As shown in FIG. 1, liners 20 and 38 are arranged between the bearing assemblies 18 and 50 and the bearing support housing 16 and 34 respectively. The bearing assemblies 18 and 50 support the main rotor shaft 14 of the helicopter. Liners 44 and 48 are arranged between the bearing assemblies 42 and 46 and the housing 40 respectively. The bearings assemblies 42 and 46 support the spiral bevel input pinion 52 of the helicopter. The spiral bevel input pinion 52 is attached to the main driveshaft coming from the engine of the helicopter. A liner 32 is positioned between a main case 28 and bearing assemblies 30. The bearing assemblies 30 support the spiral bevel gear 122. A liner 36, positioned between the bearing support housing 34 and the main case 28, locates the bearing support housing 34. The liner 36 is replaceable and eliminates fretting between the main case 28 and the bearing support housing 34 and locates the bearing support housing with respect to other housing geometry. A liner 26 is positioned between the bearing assembly 24 and a housing support 124. Housing support 124 locates and supports the bearing liner 26 and the bearing assembly 24. The liner 26 is also shown in FIG. 2 and explained in a greater detail below. A grinding relief 90, located on the liner 38, facilitates further grinding operations of the liner 38. The grinding relief 90 or a grinding radius (not shown) located on the liner is also configured to reduce stresses in the liner. The liner 44 has an o-ring groove 80. An o-ring 82 is designed to be seated in the o-ring groove 80 and is compressed during the assembly, thus creating a seal at the interface between liner 44 and the housing 84. The main rotor gearbox 10 further includes planetary gear assembly having a planetary carrier 102, a sun gear 104, a ring gear 106, and a planet gear 108. The main rotor gearbox 10 also includes bearing retaining nuts 110 and 120, a planet gear post 116, a planetary carrier support bearing 118, the spiral bevel gear 122, an upper mast seal housing 126, an upper mast seal 128.

The various liners used in the main rotor gearbox 10 may be made of any lightweight metallic material, lightweight metallic coated material, lightweight metallic alloy material, lightweight metallic alloy coated material, ceramic material or ceramic coated material. The lightweight metallic material may include aluminum, magnesium, titanium or any other lightweight metallic material as will be appreciated by one skilled in the art. The lightweight metallic alloys material may include aluminum alloys, magnesium alloys, titanium alloys or any other lightweight metallic alloys as will be appreciated by one skilled in the art. The ceramic material may include silicon nitride, zirconia, alumina oxide or any other ceramic material as will be appreciated by one skilled in the art. Few non-limiting examples of the lightweight metallic alloy coated materials and/or ceramic coated materials may include an aluminum alloy bearing liner with a hard anodize coating, a titanium alloy bearing liner with a titanium nitride coating, a magnesium alloy liner with a hard anodic coating, an aluminum/ceramic hybrid liner formed using powder compaction. Alternatively, the liner may also be made from metal matrix composites of aluminum, magnesium, titanium or any other lightweight metal matrix composites as will be appreciated by one skilled in the art. The liner may also be made from powder metal alloys of aluminum, magnesium, titanium or any other lightweight metals as will be appreciated by one skilled in the art. The lightweight metallic materials are less denser than steel but have exceptional hardness at the mating surface. The key attributes of a ceramic or a lightweight metallic liner include surface hardness, toughness, strength, coefficient of thermal expansion, machinability, galvanic corrosion potential, atmospheric corrosion potential and density that is less than that of steel.

FIG. 2 shows an exploded view of the bearing assembly located in the main rotor gearbox 10 of the helicopter, according to one embodiment of the invention. The liner 26 is positioned between the outer bearing race 62 and the bearing support housing 124. The bearing assembly 24, an assembly of the rolling elements and the outer race 62, is configured to radially support the spiral bevel gear shaft 54 located in the main gearbox 10 of the helicopter. The sun gear shaft 104 is disposed between the spiral bevel gear shaft 54 and the main rotor shaft 14. The spiral bevel gear shaft 54 is connected to the spiral bevel gear 122 and the sun gear 104. The liner 26 has a shoulder 60 that supports and locates a bearing outer race 62. The liner 26 further includes a retaining ring groove 64 to accommodate a retaining ring 66. The retaining ring 66 retains the bearing assembly 24 relative to the liner 26. The liner 26 also includes an oil passage 68 that directs a lubricant to the adjacent gears and the bearing assembly 24. FIGS. 1 and 2 discuss the bearing liners used in main rotor gearbox. Housing support 124 locates and supports the bearing liner 26 and the bearing assembly 24. The bearing liners may also be used in the tail rotor gearbox, intermediate gearbox, midwing gearbox, tilt axis gearbox, and/or accessory gearboxes of the helicopter or the tiltrotor.

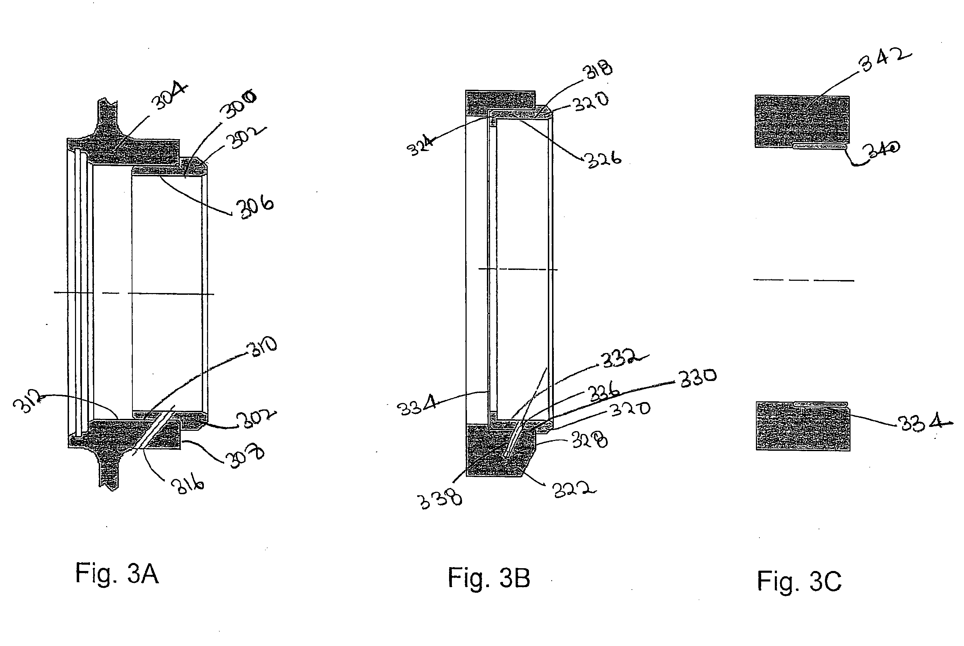

FIGS. 3A-3C show different arrangements of the liner, according to various embodiments of the invention. It will be appreciated that different types of liner shapes, configurations and/or constructions may be provided in other embodiments of the invention. The physical dimensions of the liner may be selected to accommodate a number of different types and sizes of bearing assemblies.

FIG. 3A shows a shouldered and pinned configuration for a liner 300 in accordance with an embodiment of the invention. Liner 300 is cylindrical in shape and includes a shoulder 302 located at the outer end of the housing 304. The shoulder 302 protrudes circumferentially outward from the body 306 of the liner 300. The shoulder 302 includes a lead-in chamfer to necessitate installation of a bearing outer race. The shoulder 302 abuttingly engages with a wall 308 of the housing 304. An outer wall 310 of the liner 300 engages with an inner wall 312 of the housing 304. The liner 300 and housing 304 have openings 314, 316 located along the walls of the liner 300 and the housing 304 respectively. The liner pins (not shown) are inserted into the openings 314, 316 to retain the liner 300 in the housing 304.

FIG. 3B shows a shouldered and pinned configuration for a liner 318 in accordance with an embodiment of the invention. Liner 318 is cylindrical in shape and includes a shoulder 320 located at the outer end of the housing 322 and a flange 324 located at the inner end of the housing 322. The shoulder 320 protrudes circumferentially outward from the body 326 of the liner 318 and the flange 324 protrudes circumferentially inward from the body 326 of the liner 318. The shoulder 320 abuttingly engages with a wall 328 of the housing 322. An outer wall 330 of the liner 318 engages with an inner wall 332 of the housing 322. The flange 324 abuttingly engages with a wall 334 of the housing 322. The liner 318 and housing 322 have openings 336, 338 located along the walls of the liner 318 and the housing 322 respectively. The liner pins (not shown) are inserted into the openings 336, 338 to retain the liner 318 in the housing 322. The flange 324 locates a bearing outer race axially.

FIG. 3C shows a liner 340 in a cylindrical configuration in accordance with an embodiment of the invention. In the cylindrical configuration, the liner 340 locates and provides a replaceable wear interface for the bearing with respect to housing 342. The liner 340 is positioned in the groove located on the inner wall 344 of the housing 342 . In this configuration, as in others, the liner 340 may be installed in the housing 342 by interference fitting, by adhesive bonding or by any other fastening mechanism as would be apparent to one of ordinary skill in the art. Adhesive bonding of the liner may require a geometry in the liner and/or the housing that controls the bond line thickness and provides a positive location for the liner with respect to the housing.

The liner of the housing assembly may include an anti-rotation element (not shown) that is configured to prevent rotation of the liner. The anti-rotation element located on the liner may be selected from the group consisting of slots, tabs and grooves. The liner of the housing assembly may include a witness mark (not shown) that is configured to indicate the rotation of the liner within the housing.

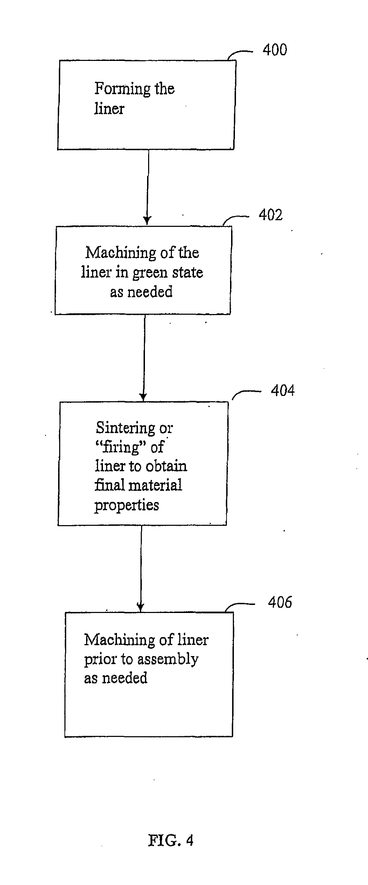

Referring now to FIG. 4, this figure shows a method for manufacturing a ceramic liner in accordance with an embodiment of the invention. The method begins at procedure 400 in which a ceramic liner is formed. This forming process may be performed using the techniques of molding, pressing, or extruding or by any other technique appreciated by one skilled in the art. The ceramic liner thus formed has a general form or shape (allowing for some shrinkage) but may not possess any of the needed material properties and strength. This general form or shape of the ceramic liner is referred to as a green state. Additional machining in the ceramics green state may be performed prior to final processes as shown in procedure 402. While in this green state, the ceramic liners are soft and can be easily machined to incorporate any additional features that may be needed. Machining in the green state is easier since the material is not as strong or as hard as it would be after sintering process. The method then proceeds to procedure 404 in which the liner is sintered bringing the material to its final strength and hardness. Sintering of the material may be accomplished in any manner appreciated by those skilled in the art and may include any combination of high temperature, pressure, and gas atmospheres. After sintering the liner, the method proceeds to procedure 406 in which the ceramic liner made by the firing or sintering process is machined to meet tolerances. Alternatively, the ceramic liners may be fired or sintered to as close to the final desired size prior to the installation. Thus, machining of the liner at procedure 406 may or may not be performed based on the dimensional tolerances that are maintained through out the curing or the sintering process.

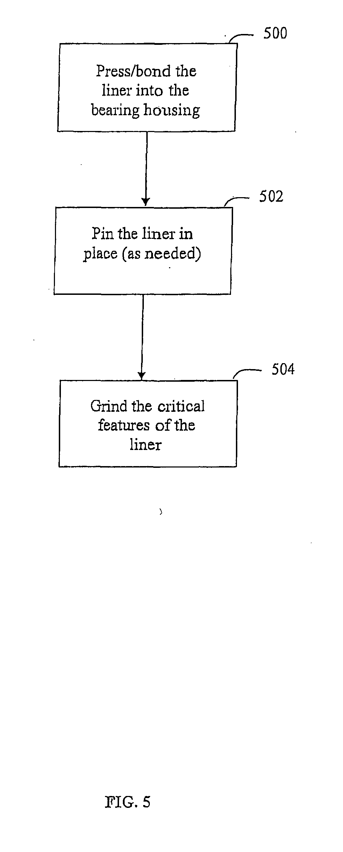

FIG. 5 shows a method for installing a ceramic liner in accordance with an embodiment of the invention. The method begins at procedure 500 in which the liner is installed into the housing. The liner may be installed into the housing by using interference fitting, adhesive bonding, or any other fastening mechanism as will be appreciated by one skilled in the art. Once the liner is installed into the housing, the method proceeds to procedure 502 in which liner pins are used as needed to pin the liner into the housing. A plurality of liner pins may be used as needed during the installation process. Then, the method proceeds to procedure 504 in which the liner goes through the final machining or grinding process. The final machining or grinding process as part of the assembly ensures that the critical liner features such as the shoulders and the inner diameter of the liner are sized and located properly with respect to other features of the housing. Tools used for final machining or grinding of the ceramic liner may be different from the tools used for final machining or grinding metallic material liners.

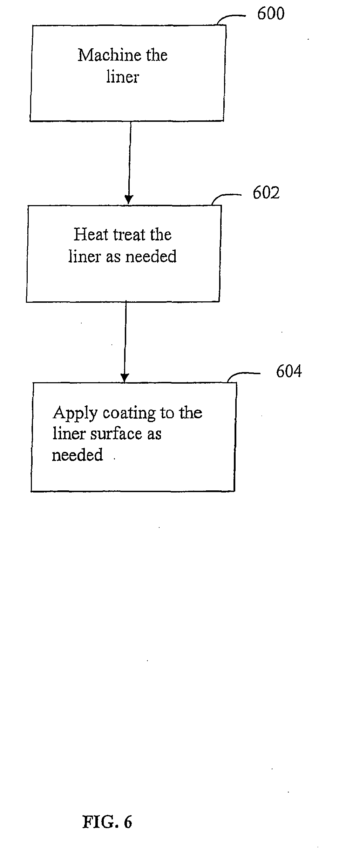

FIG. 6 shows a method of manufacturing a light weight metallic liner according to an embodiment of the invention. The method begins at procedure 600 in which the lightweight metallic liner is machined to a desired shape. The lightweight metallic materials may include aluminum, magnesium, titanium or any other lightweight metallic material as will be appreciated by one skilled in the art. The method then proceeds to procedure 602 in which the lightweight metallic liner undergoes heat treatment after the machining process. The method then may proceed to procedure 604 in which a coating is applied to the liner. The thickness of the coating applied to the liner is such that further machining will not remove the coating in its entirety from any working portion of the liner.

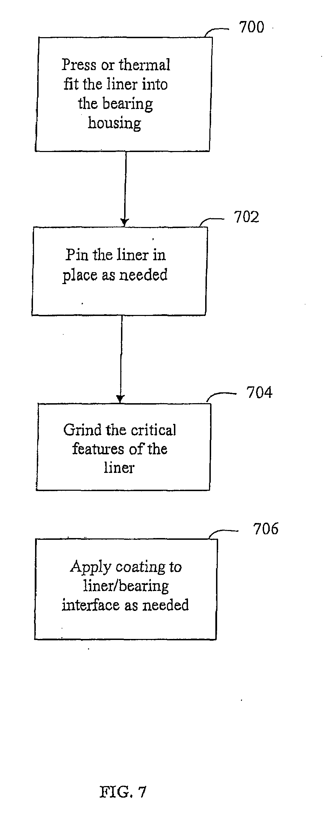

Referring now to FIG. 7, this figure shows a method for installing a lightweight metallic liner into the housing in accordance with an embodiment of the invention. The method begins at procedure 700 in which the liner is installed into the housing. The liner may be installed into the housing by using interference fitting or any other fastening mechanism as will be appreciated by one skilled in the art. Once the liner is installed into the housing, the method proceeds to procedure 702 in which liner pins are used as needed to pin the liner into the housing. A plurality of liner pins may be used as needed during the installation process. The method proceeds to procedure 704 in which the liner goes through the final machining or grinding process. The final machining or grinding process ensures that the critical liner features such as the shoulders and the inner diameter of the liner are sized and located properly with respect to other features of the housing. The method proceeds to procedure 706 in which a coating may be applied to the liner as needed. The coating is applied to the liner after final machining as long as the machining and/or grinding processes have provided an additional thickness allowance for the coating so as to maintain the dimensional accuracy of the liner.

The manufacturing process of the lightweight metallic alloy coated liner may be dependant on the alloy and the coating that is used. The metallic alloy may be installed in the housing to form a liner. The liner is then machined to a final size by providing an allowance for the subsequent coating. The liner is coated with a desired coating by using an appropriated coating process, such as plasma vapor deposition, anodize, etc.

Although in the present invention the use of the bearing liners has been described in detail with respect to the main rotor gearbox, it is to be understood that the use of the bearing liners is not limited to the main rotor gearbox assembly, but, on the contrary, the bearing liners may be used in other parts of a rotorcraft, a helicopter, a tiltrotor or an aircraft such as, for example a tail rotor gearbox, intermediate gearbox, midwing gearbox, tilt axis gearbox, and/or accessory gearboxes. Further, it will be appreciated that the bearing liners described herein maybe used in a variety of other arrangements that include a housing and a bearing assembly.

## Claims

1. A rotorcraft with a housing assembly for supporting a rotating member of the rotorcraft, the housing assembly comprising:
a bearing (18, 50) configured to axially, or radially, or both radially and axially support the member (14);
a housing comprising a bearing support housing (16, 34, 124, 304, 322, 342) configured to support the bearing (18, 50) therein; and
a liner (20, 38, 26, 300, 318, 340) positioned between the bearing support housing (16, 34, 124, 304, 322, 342) and the bearing, **characterised in that** the liner (20, 38, 26, 300, 318, 340) is made of a material selected from the group consisting of ceramic material, ceramic coated material, ceramic and metallic hybrid material, lightweight metallic material, lightweight metallic alloy material and lightweight metallic coated material,
wherein a density of the liner material is less than that of steel, and
wherein the rotating member (14) is a drive shaft configured to transfer power between a source component and a destination component of an aircraft.

2. The rotorcraft of claim 1, wherein the liner (20, 38, 26, 300, 318, 340) is retained between the bearing support housing (16, 34, 124, 304, 322, 342) and the bearing (18, 50) by interference fitting.

3. The rotorcraft of claim 1, wherein the liner (20, 38, 26, 300, 318, 340) is retained between the bearing support housing (16, 34, 124, 304, 322, 342) and the bearing (18, 50) by adhesive bonding.

4. The rotorcraft of claim 1, wherein a geometrical allowance is incorporated into the liner (20, 38, 26, 300, 318, 340) or into the bearing support housing so as to both maintain a required bond line thickness and locate the liner with respect to the bearing support housing (16, 34, 124, 304, 322, 342).

5. The rotorcraft of claim 1, wherein the liner (20, 38, 26, 300, 318, 340) is retained between the bearing support housing (16, 34, 124, 304, 322, 342) and the bearing (18, 50) by using a liner pin.

6. The rotorcraft of claim 1, wherein the liner (20, 38, 26, 300, 318, 340) includes an oil passage so as to allow a lubricant to pass from the bearing support housing (16, 34, 124, 304, 322, 342) to the bearing (18, 50) or a gear.

7. The rotorcraft of claim 1, wherein the liner (300, 318) comprises a shoulder (302, 320) so as to locate and support a bearing outer race and a pin hole to accommodate a liner pin that is configured to attach the liner (300, 318) to the housing (304, 322).

8. The rotorcraft of claim 7, wherein the shoulder (302, 320) extends circumferentially outward from a body of the liner (300, 318).

9. The rotorcraft of claim 1, wherein the liner (20, 38, 26, 300, 318, 340) comprises a retaining ring groove (64) to accommodate a retaining ring (66) that is configured to locate the bearing (18, 50) relative to the liner (20, 38, 26, 300, 318, 340).

10. The rotorcraft of claim 1, wherein the liner (20, 38, 26, 300, 318, 340) comprises a witness mark to indicate the rotation of the liner (20, 38, 26, 300, 318, 340) within bearing support the housing.

11. The rotorcraft of claim 1, wherein the liner (20, 38, 26, 300, 318, 340) comprises an anti-rotation element that is configured to prevent rotation of liner (20, 38, 26, 300, 318, 340).

12. The rotorcraft of claim 11, wherein the anti-rotation element located on the liner (20, 38, 26, 300, 318, 340) is selected from the group consisting of slots, tabs and grooves.

13. The rotorcraft of claim 1, wherein the liner (20, 38, 26, 300, 318, 340) is cylindrical in shape and hollow so as to accommodate the bearing (18, 50).

14. The rotorcraft of claim 1, wherein the liner has an o-ring groove (80) to accommodate an or-ring (82) that is configured to provide a seal at the interface between the liner (20, 38, 26, 300, 318, 340) and the bearing support housing (16, 34, 124, 304, 322, 342).

15. The rotorcraft of claim 1, wherein the ceramic material includes silicon nitride, zirconia or alumina oxide.

16. The rotorcraft of claim 1, wherein the bearing support housing (16, 34, 124, 304, 322, 342) includes an opening; and, the bearing (18, 50) is disposed within the opening of the bearing support housing (16, 34, 124, 304, 322, 342).

17. The rotorcraft of claim 1, wherein the rotating member is a main rotor shaft (14) of the rotorcraft that is configured to transfer power from a main rotor gearbox (10) to a main rotor of the rotorcraft.

18. The rotorcraft of claim 1, wherein the liner (20, 38, 26, 300, 318, 340) further comprises a grinding relief (90) configured to facilitate a subsequent grinding operation on the liner (20, 38, 26, 300, 318, 340).

19. The rotorcraft of claim 1, wherein the liner (20, 38, 26, 300, 318, 340) further comprises a grinding relief (90) of a grinding radius configured to reduce stress in the liner (20, 38, 26, 300, 318, 340).

## Patentansprüche

1. Drehflügler mit einer Gehäusebaugruppe zum Tragen eines rotierenden Elements des Drehflüglers, wobei die Gehäusebaugruppe umfasst:
ein Lager (18, 50), das so gestaltet ist, dass es das Element (14) axial oder radial oder sowohl axial als auch radial trägt;
ein Gehäuse, das ein Lagertraggehäuse (16, 34, 124, 304, 322, 342) umfasst, das dafür ausgelegt ist, das Lager (18, 50) in sich zu tragen; und
einen Einsatz (20, 38, 26, 300, 318, 340), der zwischen dem Lagertraggehäuse (16, 34, 124, 304, 322, 342) und dem Lager angeordnet ist, **dadurch gekennzeichnet, dass** der Einsatz (20, 38, 26, 300, 318, 340) aus einem Material gefertigt ist, das ausgewählt ist aus der Gruppe bestehend aus keramischem Material, mit Keramik überzogenem Material, keramisch-metallischem Mischmaterial, Leichtmetallmaterial, Leichtmetalllegierungsmaterial und mit Leichtmetall überzogenem Material,
wobei eine Dichte des Einsatzmaterials geringer ist als die von Stahl, und
wobei das rotierende Element (14) eine Antriebswelle ist, die so gestaltet ist, dass sie Leistung zwischen einer Ursprungskomponente und einer Zielkomponente eines Luftfahrzeugs überträgt.

2. Drehflügler nach Anspruch 1, wobei der Einsatz (20, 38, 26, 300, 318, 340) zwischen dem Lagertraggehäuse (16, 34, 124, 304, 322, 342) und dem Lager (18, 50) durch eine Presspassung gehalten wird.

3. Drehflügler nach Anspruch 1, wobei der Einsatz (20, 38, 26, 300, 318, 340) zwischen dem Lagertraggehäuse (16, 34, 124, 304, 322, 342) und dem Lager (18, 50) durch Stoffschluss gehalten wird.

4. Drehflügler nach Anspruch 1, wobei eine geometrische Toleranz in den Einsatz (20, 38, 26, 300, 318, 340) oder in das Lagertraggehäuse aufgenommen ist, um sowohl eine benötigte Klebfugendicke aufrechtzuerhalten als auch den Einsatz in Bezug auf das Lagertraggehäuse (16, 34, 124, 304, 322, 342) anordnen zu können.

5. Drehflügler nach Anspruch 1, wobei der Einsatz (20, 38, 26, 300, 318, 340) zwischen dem Lagertraggehäuse (16, 34, 124, 304, 322, 342) und dem Lager (18, 50) unter Verwendung eines Einsatzstifts gehalten wird.

6. Drehflügler nach Anspruch 1, wobei der Einsatz (20, 38, 26, 300, 318, 340) einen Ölkanal beinhaltet, so dass ein Schmiermittel von dem Lagertraggehäuse (16, 34, 124, 304, 322, 342) zum Lager (18, 50) oder einem Zahnrad fließen kann.

7. Drehflügler nach Anspruch 1, wobei der Einsatz (300, 318) einen Absatz (302, 320), um einen Außenlaufring des Lagers anzuordnen und zu tragen, und ein Stiftloch aufweist, um einen Einsatzstift aufzunehmen, der dafür ausgelegt ist, den Einsatz (300, 318) am Gehäuse 304, 322) zu befestigen.

8. Drehflügler nach Anspruch 7, wobei sich der Absatz (302, 320) in Umfangsrichtung von einem Körper des Einsatzes (300, 318) aus nach außen erstreckt.

9. Drehflügler nach Anspruch 1, wobei der Einsatz (20, 38, 26, 300, 318, 340) eine Klammerringnut (64) umfasst, um einen Klammerring (66) aufzunehmen, der so gestaltet ist, dass er das Lager (18, 50) in Bezug auf den Einsatz (20, 38, 26, 300, 318, 340) anordnet.

10. Drehflügler nach Anspruch 1, wobei der Einsatz (20, 38, 26, 300, 318, 340) eine Markierung trägt, um die Drehung des Einsatzes (20, 38, 26, 300, 318, 340) innerhalb des Lagertraggehäuses anzuzeigen.

11. Drehflügler nach Anspruch 1, wobei der Einsatz (20, 38, 26, 300, 318, 340) ein rotationshemmendes Element aufweist, das so gestaltet ist, dass es eine Drehung des Einsatzes (20, 38, 26, 300, 318, 340) verhindert.

12. Drehflügler nach Anspruch 11, wobei das rotationshemmende Element, das an dem Einsatz (20, 38, 26, 300, 318, 340) angeordnet ist, ausgewählt ist aus der Gruppe bestehend aus Langlöchern, Vorsprüngen und Nuten.

13. Drehflügler nach Anspruch 1, wobei der Einsatz (20, 38, 26, 300, 318, 340) zylindrisch geformt und hohl ist, um das Lager (18, 50) aufzunehmen.

14. Drehflügler nach Anspruch 1, wobei der Einsatz eine O-Ringnut (80) aufweist, um einen O-Ring (82) aufzunehmen, der so gestaltet ist, dass er eine Dichtung an der Grenzfläche zwischen dem Einsatz (20, 38, 26, 300, 318, 340) und dem Lagertraggehäuse (16, 34, 124, 304, 322, 342) bereitstellt.

15. Drehflügler nach Anspruch 1, wobei das keramische Material Siliciumnitrid, Zirconiumoxid oder Aluminiumoxid beinhaltet.

16. Drehflügler nach Anspruch 1, wobei das Lagertraggehäuse (16, 34, 124, 304, 322, 342) eine Öffnung beinhaltet; und das Lager (18, 50) in der Öffnung des Lagertraggehäuses (16, 34, 124, 304, 322, 342) angeordnet ist.

17. Drehflügler nach Anspruch 1, wobei das rotierende Element eine Hauptrotorwelle (14) des Drehflüglers ist, die dafür ausgelegt ist, eine Leistung von einem Hauptrotorgetriebe (10) auf einen Hauptrotor des Drehflüglers zu übertragen.

18. Drehflügler nach Anspruch 1, wobei der Einsatz (20, 38, 26, 300, 318, 340) ferner einen Schleiffreischnitt (90) umfasst, der so gestaltet ist, dass er ein anschließendes Schleifen des Einsatzes (20, 38, 26, 300, 318, 340) erleichtert.

19. Drehflügler nach Anspruch 1, wobei der Einsatz (20, 38, 26, 300, 318, 340) ferner einen Schleiffreischnitt (90) mit einem Schleifradius umfasst, der so gestaltet ist, dass er eine Spannung in dem Einsatz (20, 38, 26, 300, 318, 340) verringert.

## Revendications

1. Un giravion avec un ensemble boîtier pour le support d'un élément rotatif du giravion, l'ensemble boîtier comprenant :
un palier (18, 50) configuré de façon à soutenir axialement ou radialement, ou à la fois radialement et axialement, l'élément (14),
un boîtier comprenant un boîtier de support de palier (16, 34, 124, 304, 322, 342) configuré de façon à soutenir le palier (18, 50) dans celui-ci, et
une garniture (20, 38, 26, 300, 318, 340) positionnée entre le boîtier de support de palier (16, 34, 124, 304, 322, 342) et le palier, **caractérisée en ce que** la garniture (20, 38, 26, 300, 318, 340) se compose d'un matériau sélectionné dans le groupe se composant d'un matériau céramique, d'un matériau recouvert de céramique, d'un matériau hybride métallique et céramique, d'un matériau métallique léger, d'un matériau d'alliage métallique léger et d'un matériau recouvert d'un métal léger,
où une densité du matériau de garniture est inférieure à celle de l'acier, et
où l'élément rotatif (14) est un arbre d'entraînement configuré de façon à transférer de la puissance entre un composant source et un composant de destination d'un aéronef.

2. Le giravion selon la Revendication 1, où la garniture (20, 38, 26, 300, 318, 340) est retenue entre le boîtier de support de palier (16, 34, 124, 304, 322, 342) et le palier (18, 50) par un ajustement serré.

3. Le giravion selon la Revendication 1, où la garniture (20, 38, 26, 300, 318, 340) est retenue entre le boîtier de support de palier (16, 34, 124, 304, 322, 342) et le palier (18, 50) par une fixation adhésive.

4. Le giravion selon la Revendication 1, où une tolérance géométrique est incorporée à la garniture (20, 38, 26, 300, 318, 340) ou au boîtier de support de palier de façon à à la fois maintenir une épaisseur de ligne de collage requise et positionner la garniture par rapport au boîtier de support de palier (16, 34, 124, 304, 322, 342).

5. Le giravion selon la Revendication 1, où la garniture (20, 38, 26, 300, 318, 340) est retenue entre le boîtier de support de palier (16, 34, 124, 304, 322, 342) et le palier (18, 50) au moyen d'une goupille de garniture.

6. Le giravion selon la Revendication 1, où la garniture (20, 38, 26, 300, 318, 340) comprend un passage d'huile destiné à permettre à un lubrifiant de passer du boîtier de support de palier (16, 34, 124, 304, 322, 342) au palier (18, 50) ou à un engrenage.

7. Le giravion selon la Revendication 1, où la garniture (300, 318) comprend un épaulement (302, 320) destiné à positionner et soutenir une bague extérieure de palier et un trou de goupille destiné à loger une goupille de garniture qui est configurée de façon à rattacher la garniture (300, 318) au boîtier (304, 322).

8. Le giravion selon la Revendication 7, où l'épaulement (302, 320) s'étend circonférentiellement vers l'extérieur à partir d'un corps de la garniture (300, 318).

9. Le giravion selon la Revendication 1, où la garniture (20, 38, 26, 300, 318, 340) comprend une rainure d'anneau de retenue (64) destinée à loger un anneau de retenue (66) qui est configuré de façon à positionner le palier (18, 50) par rapport à la garniture (20, 38, 26,300,318,340).

10. Le giravion selon la Revendication 1, où la garniture (20, 38, 26, 300, 318, 340) comprend un repère témoin destiné à indiquer la rotation de la garniture (20, 38, 26, 300, 318, 340) à l'intérieur du boîtier de support de palier.

11. Le giravion selon la Revendication 1, où la garniture (20, 38, 26, 300, 318, 340) comprend un élément anti-rotation qui est configuré de façon à empêcher une rotation de la garniture (20, 38, 26, 300, 318, 340).

12. Le giravion selon la Revendication 11, où l'élément anti-rotation placé sur la garniture (20, 38, 26, 300, 318, 340) est sélectionné dans le groupe se composant de fentes, languettes et rainures.

13. Le giravion selon la Revendication 1, où la garniture (20, 38, 26, 300, 318, 340) est de forme cylindrique et creuse de façon à loger le palier (18, 50).

14. Le giravion selon la Revendication 1, où la garniture possède une rainure de joint torique (80) destinée à loger un joint torique (82) qui est configuré de façon à fournir un joint d'étanchéité au niveau de l'interface entre la garniture (20, 38, 26, 300, 318, 340) et le boîtier de support de palier (16, 34, 124, 304, 322, 342).

15. Le giravion selon la Revendication 1, où le matériau céramique contient du nitrure de silice, de la zircone ou de l'oxyde d'alumine.

16. Le giravion selon la Revendication 1, où le boîtier de support de palier (16, 34, 124, 304, 322, 342) comprend une ouverture et le palier (18, 50) est disposé à l'intérieur de l'ouverture du boîtier de support de palier (16, 34, 124, 304, 322, 342).

17. Le giravion selon la Revendication 1, où l'élément rotatif est un arbre de rotor principal (14) du giravion qui est configuré de façon à transférer de la puissance à partir d'une boîte à engrenages de rotor principal (10) vers un rotor principal du giravion.

18. Le giravion selon la Revendication 1, où la garniture (20, 38, 26, 300, 318, 340) comprend en outre un relief de meulage (90) configuré de façon à faciliter une opération de meulage subséquente sur la garniture (20, 38, 26, 300, 318, 340).

19. Le giravion selon la Revendication 1, où la garniture (20, 38, 26, 300, 318, 340) comprend en outre un relief de meulage (90) d'un rayon de meulage configuré de façon à réduire une contrainte dans la garniture (20, 38, 26, 300, 318, 340).
